# EUROPEAN PATENT SPECIFICATION

(11) **EP 0 368 527 B1**
(45) Date of publication and mention of the grant of the patent: **09.06.1993**
(21) Application number: 89311187.2
(22) Date of filing: 30.10.1989
(51) Int. Cl.: F16L 55/132

(54) **Device and method for temporarily blocking the bore of a pipe through which a fluid flows**
Vorrichtung und Verfahren zum zeitweiligen Abschliessen einer Flüssigkeitstransportkanalisation
Dispositif et procédé d'obturation temporaire d'une canalisation transportant un fluide

(30) Priority: 10.11.1988 GB 8826349; 05.01.1989 GB 8900205
(43) Date of publication of application: 16.05.1990
(73) Proprietor: British Gas plc, London SW1V 3JL (GB)
(72) Inventor: Clough, Peter Spence, Stretford (GB)
(74) Representative: Morgan, David James

(56) References cited:
- GB-A- 2 157 390
- US-A- 4 428 204

## Description

The present invention relates to the temporary blocking of the bore in a pipe through which a fluid flows and is particularly directed to the temporary blocking of mains carrying natural gas.

Where repairs to a section of a gas main are to be carried out or where a section of the main is to be partially or completely replaced it is frequently necessary temporarily to block the bore or main at a point or points upstream of the section. This prevents the flow of gas to the section of the main downstream of the blockage so that the necessary work can be carried out.

At present such temporary blockage is performed with the aid of an expansible bag of the type having an innermost inflatable bladder usually of rubber contained with an outermost protective bag of nylon or some such similar material. In use of such bags, a hole is drilled in the wall of the main and the bag is inserted into the main by way of an insertion device in the form of a sealable tube which is temporarily securable in the hole so drilled. Once inside the main the inner bladder is inflated by a supply of pressurised gas e.g. compressed air, by way of a pipe connected to the mouth of the bag, the pipe also providing means for locating the bag inside the main through the insertion tube which forms a gas-tight seal around the pipe.

Inflation of the bladder causes it to expand and force the outer bag to engage with the inner wall of the main to form a seal against the wall of the main.

The bag is removed by deflating the bladder and then withdrawing the pipe from the main via the hole and the insertion tube.

Unfortunately the outer protective bag and even the inner bladder are frequently ripped or torn as they are withdrawn from the main. This renders the bag totally unserviceable and it is not an uncommon occurrence that such bags are irreparably damaged after just one operation. Since these bags are relatively expensive, the overall cost of the repairs or replacement operations is increased owing to the wastage of such bags.

It is an object of the present invention to provide means whereby this overall cost may be reduced.

UK Published Patent Application No. 2157390A (Steve Vick) discloses a technique for temporarily blocking the bore of a pipe through which a fluid flows, which technique involves the use of an expansible bag seal for insertion through a hole provided in the wall of a pipe, using injection means to inject into the bag after insertion a quantity of a material which expands in situ within the bag seal (e.g. polyurethane foam) and inflates the bag seal against the inside of the pipe.

According to one aspect of the present invention, we provide a kit for temporarily blocking the bore of a pipe through which a fluid flows, the kit comprising an expansible flexible bag seal for insertion through a hole provided in the wall of the pipe, a quantity of material for injection into the bag seal after its insertion into the pipe, the material being adapted to expand in situ within the bag seal and inflate the bag seal against the inside of the pipe and means for injecting the material into the bag seal, a quantity of a substance being provided for subsequent injection into the bag seal to dissolve the material within the bag seal after expansion so that the bag seal can be at least partially deflated by dissolution of the material to enable the bag seal to be removed from the pipe by way of the hole after use.

According to another aspect of the present invention, we provide a method for temporarily blocking the bore of a pipe through which a fluid flows, the method comprising inserting an expansible flexible bag seal through a hole provided in the wall of the pipe and then injecting into the bag seal a quantity of a material which is adapted to expand in situ in the bag seal and inflate the bag seal to seal against the inside of the pipe, a quantity of a substance capable of dissolving the material within the bag seal being injected into the bag seal after inflation to dissolve the material within the bag seal so that the bag seal can be at least partially deflated by dissolution of the material to enable the bag seal to be removed from the pipe by way of the hole after use.

The material may be in the form of a preformed expandable synthetic resin foam. A suitable foam may be produced by mixing together compounds CDN 15A and CDN 15B manufactured by Chemence Ltd., the mixture being injected into the bag.

Alternatively the material may comprise components for mixing within the bag seal to form the expandable foam.

A suitable solvent for dissolving the foam is acetone.

The bag seal can comprise a single bag rather than a double-bag. The bag may be of a relatively cheap material such as polythene.

Since the bag seal itself, the foam and solvent can be of relatively cheap materials the components are disposable and the system provides a cheap disposable means for temporarily blocking the bore of a gas main.

The bag of for example polythene can as conventional be inserted into the main by way of a sealable insertion tube whose end is temporarily located in a hole drilled in the wall of the main. The mouth of the bag is first secured to the end of a pipe before insertion and the bag is inserted in the main by pushing the pipe through the tube into the main, the tube forming a gas-tight seal around the pipe. A suitable quantity of preformed expandable foam produced by mixing together CDN 15A and CDN 15B is then injected into the bag by way of the pipe. The foam is allowed to expand and inflate the bag to form a seal against the inner wall of the main.

To remove the bag a suitable quantity of a substance capable of dissolving the foam is injected into the bag by way of the pipe. A suitable substance is acetone and this is allowed to dissolve the foam so that the bag is at least partially deflated. The pipe is then withdrawn through the tube to remove the bag from the main. Since the bag, the foam and solvent are disposable it does not matter whether the bag is damaged since it will not be re-used.

## Claims

1. A kit for temporarily blocking the bore of a pipe through which a fluid flows, the kit comprising an expansible flexible bag seal for insertion through a hole provided in the wall of the pipe, a quantity of material for injection into the bag seal after its insertion into the pipe, the material being adapted to expand in situ within the bag seal and inflate the bag seal against the inside of the pipe and means for injecting the material into the bag seal, characterised in that a quantity of a substance is provided for subsequent injection into the bag seal to dissolve the material within the bag seal after expansion so that the bag seal can be at least partially deflated by dissolution of the material to enable the bag seal to be removed from the pipe by way of the hole after use.

2. A kit as claimed in claim 1, characterised in that the material is a preformed expandable synthetic resin foam.

3. A kit as claimed in claim 2, characterised in that the material comprises components for mixing within the bag seal to form the expandable synthetic resin foam.

4. A method for temporarily blocking the bore of a pipe through which a fluid flows, the method comprising inserting an expansible flexible bag seal through a hole provided in the wall of the pipe and then injecting into the bag seal a quantity of a material which is adapted to expand in situ in the bag seal and inflate the bag seal to seal against the inside of the pipe, characterised in that a quantity of a substance capable of dissolving the material within the bag seal is injected into the bag seal after inflation to dissolve the material within the bag seal so that the bag seal can be at least partially deflated by dissolution of the material to enable the bag seal to be removed from the pipe by way of the hole after use.

5. A method as claimed in claim 4, characterised in that the material is an expandable synthetic resin foam.

6. A method as claimed in claim 5, characterised in that the material comprises components for mixing within the bag seal to form the expandable synthetic resin foam.

## Patentansprüche

1. Einrichtung zum vorübergehenden Absperren der Bohrung eines Rohres, durch welches ein Strömungsmittel fließt, wobei die Einrichtung eine expandierbare flexible Beuteldichtung zum Einführen über ein Loch, das in der Wand des Rohres vorgesehen ist, aufweist, ferner eine Materialmenge zum Injizieren in die Beuteldichtung nach deren Einführen in das Rohr aufweist, wobei das Material in der Lage ist, an Ort und Stelle innerhalb der Beuteldichtung zu expandieren und die Beuteldichtung gegen die Innenseite des Rohres aufzublasen, sowie Mittel zum Injizieren des Materials in die Beuteldichtung aufweist, dadurch gekennzeichnet, daß eine Menge einer Substanz zum nachfolgenden Injizieren in die Beuteldichtung vorgesehen ist, um das Material innerhalb der Beuteldichtung nach der Expansion aufzulösen, so daß die Beuteldichtung zumindest teilweise durch Auflösung des Materials geschrumpft werden kann, um die Beuteldichtung aus dem Rohr über das Loch nach Gebrauch entnehmen zu können.

2. Einrichtung nach Anspruch 1, dadurch gekennzeichnet, daß das Material ein vorgeformter expandierbarer Kunstharzschaum ist.

3. Einrichtung nach Anspruch 2, dadurch gekennzeichnet, daß das Material Komponenten zum Mischen innerhalb der Beuteldichtung aufweist, um den expandierbaren Kunstharzschaum zu bilden.

4. Verfahren zum vorübergehenden Absperren der Bohrung eines Rohres, durch welches ein Strömungsmittel fließt, bei dem eine expandierbare flexible Beuteldichtung über ein in der Wand des Rohres vorgesehenes Loch eingeführt wird und dann in die Beuteldichtung ein Quantum eines Materials injiziert wird, das in der Lage ist, an Ort und Stelle in der Beuteldichtung zu expandieren und die Beuteldichtung aufzublasen, um gegen die Innenseite des Rohres abzudichten, dadurch gekennzeichnet, daß ein Quantum einer Substanz, die in der Lage ist, das Material innerhalb der Beuteldichtung aufzulösen, in die Beuteldichtung nach dem Aufblasen injiziert wird, um das Material innerhalb der Beuteldichtung aufzulösen, so daß die Beuteldichtung zumindest teilweise durch Auflösung des Materials geschrumpft und die Beuteldichtung nach Gebrauch über das Loch aus dem Rohr herausgenommen werden kann.

5. Verfahren nach Anspruch 4, dadurch gekennzeichnet, daß das Material expandierbarer Kunstharzschaum ist.

6. Verfahren nach Anspruch 6, dadurch gekennzeichnet, daß das Material Komponenten zum Mischen innerhalb der Beuteldichtung aufweist, um den expandierbaren Kunstharzschaum zu bilden.

## Revendications

1. Nécessaire pour obturer temporairement le trou d'un tuyau dans lequel un fluide circule, le nécessaire comprenant un sac souple expansible formant joint et destiné à être introduit par un trou réalisé dans la paroi du tuyau, une quantité de matière destinée à être injectée dans le sac formant joint après son introduction dans le tuyau, la matière étant conçue pour se dilater in situ à l'intérieur du sac formant joint et gonfler ce sac contre l'intérieur du tuyau et un moyen pour injecter la matière dans le sac formant joint, caractérisé en ce qu'une quantité de substance est prévue pour être injectée ultérieurement dans le sac formant joint afin de dissoudre la matière à l'intérieur de ce sac après son expansion, afin que le sac formant joint puisse être au moins partiellement dégonflé par dissolution de la matière pour permettre au sac formant joint d'être enlevé du tuyau par le trou après utilisation.

2. Nécessaire selon la revendication 1, caractérisé en ce que la matière est une mousse de résine synthétique préformée et pouvant gonfler.

3. Nécessaire selon la revendication 2, caractérisé en ce que la matière comprend des composants destinés à être mélangés à l'intérieur du sac formant joint de manière à former la mousse de résine synthétique pouvant gonfler.

4. Procédé d'obturation temporaire du trou d'un tuyau dans lequel un fluide circule, le procédé consistant à introduire un sac souple gonflable formant joint par un trou réalisé dans la paroi du tuyau et ensuite à injecter dans le sac formant joint une quantité d'une matière qui est conçue pour gonfler in situ dans le sac formant joint et à gonfler le sac de manière qu'il forme un joint contre l'intérieur du tuyau, caractérisé en ce qu'une quantité d'une substance capable de dissoudre la matière à l'intérieur du sac formant joint est injectée dans ce sac après son gonflage pour dissoudre la matière à l'intérieur du sac afin que celui-ci puisse se dégonfler au moins partiellement par dissolution de la matière pour permettre au sac formant joint d'être enlevé du tuyau par le trou après utilisation.

5. Procédé selon la revendication 4, caractérisé en ce que la matière est une mousse de résine synthétique pouvant gonfler.

6. Procédé selon la revendication 5, caractérisé en ce que la matière comprend des composants destinés à se mélanger à l'intérieur du sac formant joint pour former la mousse de résine synthétique pouvant gonfler.
